# EUROPEAN PATENT SPECIFICATION

(11) **EP 2 669 167 B1**
(45) Date of publication and mention of the grant of the patent: **03.12.2014**
(21) Application number: 12189000.8
(22) Date of filing: 18.10.2012
(51) Int. Cl.: B62J 35/00

(54) **Fuel tank and saddle riding type vehicle**
Brennstofftank und Sattelfahrzeug
Réservoir de carburant et véhicule du type chevauchement de selle

(30) Priority: 28.05.2012 JP 2012120807
(43) Date of publication of application: 04.12.2013
(73) Proprietor: Yamaha Hatsudoki Kabushiki Kaisha, Iwata-shi, Shizuoka 438-8501 (JP)
(72) Inventor: Nakasai, Makoto, Shizuoka, 438-8501 (JP)
(74) Representative: Zimmermann, Tankred Klaus

(56) References cited:
- WO-A1-2010/013481
- WO-A1-2012/014719
- JP-A- H0 647 572
- JP-A- H0 899 666
- JP-A- H11 321 752
- JP-A- 2006 315 656
- US-A- 5 968 672
- US-A1- 2007 200 332

## Description

### BACKGROUND

### Technical Field

The present invention relates to a saddle riding type vehicle, and more specifically to a support structure for a fuel tank in a saddle riding type vehicle.

### Description of the Background Art

An example of a saddle riding type vehicle is a motorcycle. Recently, some motorcycles include an electronic fuel injection system.

The motorcycle is provided with a fuel pump in a fuel tank. The fuel pump feeds fuel into an injector. The injector injects fuel.

The fuel tank is provided for example under the seat. The manner of providing a fuel tank is for example disclosed by JP-A 2008-189009.

JP 2006-315656 A, which is considered as forming the closest prior art, describes a fuel tank mounting structure for a motor cycle allowing to enhance the capacity of the fuel tank. A motorcycle comprises a main frame extended down aslant backward from a head pipe, a power unit installed in the lower part of the main frame, a left and a right rear frame extended up aslant backward from the rear of the main frame, and a fuel tank mounted on the rear frames, wherein the rear frames are elongated backward after the rear of the main frame connection part is bent up, and the fuel tank is mounted over the front and rear of the bent parts The fuel tank is formed by two halves, each having a flange. On one half, the flange has a downward extending part for reinforcing a mounting part.

### SUMMARY

It is an object of the present invention to provide a fuel tank that allows its fixing part to a frame to have increased rigidity while allowing for an easy manufacturing and securing a capacity therefor and a saddle riding type vehicle including the fuel tank.

This object is achieved by a fuel tank according to claim 1, and by a saddle riding type vehicle according to claim 5.

The inventors found that the conventional fuel tank is disadvantageous. The disclosed fuel tank has a flange. The fuel tank is fixed to a frame at the flange. The fuel tank is fixed at its front part and rear part. The disclosed fuel tank has increased weight in order to store a fuel pump. Therefore, large stress is likely to be applied on a fixing part. If the shape of the fuel tank is changed in order to secure sufficient strength at the fixing part, the capacity of the fuel tank could be reduced. These drawbacks are avoided by the fuel tank of the present invention.

A fuel tank according to the present invention is provided between and fixed to left and right frames that extend in a front-back direction of a saddle riding type vehicle. The fuel tank includes a pair of tank sections, a flange, and a reinforcing plate. The tank sections are provided as they are placed on each other to form the fuel tank. The pair of tank sections define a space for receiving a fuel pump. A flange is formed at each of the pair of tank sections. The flanges connect the pair of tank sections. The flange has a fixing hole. A bolt used to fix the fuel tank to the left and right frames is inserted into the fixing hole. A reinforcing plate is provided on one flange. The reinforcing plate has a through hole into which the bolt is inserted. The reinforcing plate extends along an outer edge of one of the flanges from a position where the through hole is formed. In a first region overlapped by the reinforcing plate, the flange has a second region that does not overlap the other flange. The fixing hole of one of the flanges is positioned in a third region defined by excluding the second region from the first region. The reinforcing plate is welded to the flange in the second region.

The fuel tank according to the present invention can have increased rigidity at its fixing part to a frame while securing a capacity.

A saddle riding type vehicle according to the present invention includes left and right frames and a fuel tank. The left and right frames extend in a vehicle front-back direction. The fuel tank is provided between and fixed to the left and right frames. The fuel tank includes a pair of tank sections, a flange, and a reinforcing plate. The tank sections are placed on each other to form the fuel tank. The pair of tank sections form a space adapted to receive a fuel pump. The flange is formed at each of the pair of tank sections. The flanges connect the pair of tank sections and each have a fixing hole into which a bolt used to fix the fuel tank to the left and right frames is inserted. The reinforcing plate is provided on one of the flanges. The reinforcing plate has a through hole into which the bolt is inserted. The reinforcing plate extends along an outer edge of the flange from a position where the through hole is formed. One of the flanges has a second region that does not overlap the other flange in a first region overlapped by the reinforcing plate. The fixing hole of the flange is positioned in a third region defined by excluding the second region from the first region. The reinforcing plate is welded to the flange in the second region.

The saddle riding type vehicle according to the present invention can have increased rigidity at the fixing part of the fuel tank to the frame while securing a capacity for the fuel tank.

### BRIEF DESCRIPTION OF THE DRAWINGS

Fig. 1 is a left side view of an overall structure of a motorcycle according to an embodiment of the present invention.
Fig. 2 is a left side view of a fuel tank.
Fig. 3 is a plan view of the fuel tank viewed in a direction perpendicular to a top surface of a flange.
Fig. 4 is a plan view showing where a first reinforcing plate is spot-welded to a flange.
Fig. 5 is a plan view showing where a second reinforcing plate is spot-welded to the flange.
Fig. 6 is a left side view of a support structure for the fuel tank.
Fig. 7 is a plan view of the support structure for the fuel tank.

### DESCRIPTION OF THE EMBODIMENTS

A saddle riding type vehicle provided with a fuel injection system has a fuel pump provided in a fuel tank. This increases the weight of the fuel tank.

When the fuel tank is heavy, greater stress is applied on the part of the fuel tank fixed to the frame. Therefore, the fixing part of the fuel tank to the frame must have sufficient rigidity.

In order to secure rigidity for the part of the fuel tank fixed to the frame, the shape of the fuel tank may be changed. The fuel tank is provided between the left and right frames that extend in the front-back direction of the saddle riding type vehicle. It is difficult to expand the gap between the left and right frames. The shape of the fuel tank may be changed so that the fuel tank is provided in the limited space. If the shape of the fuel tank is changed, however, the capacity of the fuel tank may be reduced.

The inventor thought about the possibility of securing rigidity for the parts of the fuel tank fixed to the frames by increasing the rigidity of flanges used to fix the fuel tank to the frames.

In order to increase the rigidity of the flanges, the thickness of the flanges may be increased. A pair of tank sections is each formed by treating a metal plate. Therefore, when the thickness of the flange of each tank section is increased, the capacity of the fuel tank is reduced.

It may be possible to attach a reinforcing plate to the flange. However, it would not be sufficient to simply attach the reinforcing plate to the flange.

For example, spot-welding may be one method of attaching the reinforcing plate to the flange. However, the fuel tank is formed by joining the flanges of the pair of tank sections for example by seam-welding. If a reinforcing plate is welded in this state, three metal plates (flanges for the tank sections and the reinforcing plate) are welded. Therefore, a special device for the purpose would be necessary, which makes it difficult to use existing facility.

Another way of attaching a reinforcing plate is fixing using a bolt. In this case, a hole through which a bolt is inserted must be formed in the flange. The flange should be larger for the purpose. The rigidity of the flange could be lowered by forming the hole.

Then, the inventor has found that the rigidity of the part of the fuel tank fixed to the frame can be improved while securing a sufficient capacity for the fuel tank by devising the shape of the flange of each of the tank sections and the reinforcing plate.

### Embodiments

Now, a saddle riding type vehicle according to an embodiment of the present invention will be described in conjunction with the accompanying drawings. In the following, the saddle riding type vehicle will be described by way of a scooter type motorcycle. In the drawings, the same or corresponding portions are designated by the same reference characters and their description will not be repeated.

### Overall Structure

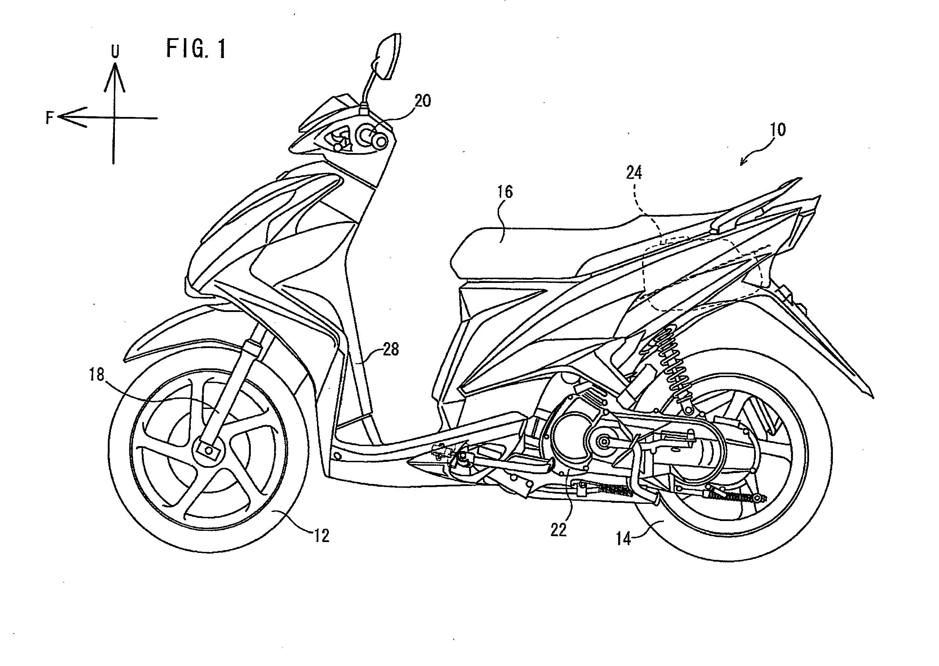

Fig. 1 is a left side view of a motorcycle 10 according to the embodiment of the invention. Note that in the following description, the front, rear, left, and right refer to these directions viewed from a rider seated on the seat of the motorcycle 10. In Fig. 1, the arrow F designates the forward direction of the motorcycle 10 and the arrow U designates the upward direction of the motorcycle 10.

The motorcycle 10 includes a front wheel 12, a rear wheel 14, and a seat 16.

The front wheel 12 is supported rotatably by a front fork 18. The front wheel 12 is rotatable to the left and right as the handle 20 is operated.

The rear wheel 14 is provided at a rear end of a power unit 22. As the motive power of the power unit 22 is transmitted, the rear wheel 14 rotates.

The seat 16 is provided behind the handle 20. A fuel tank 24 is provided under the seat 16.

### Fuel Tank

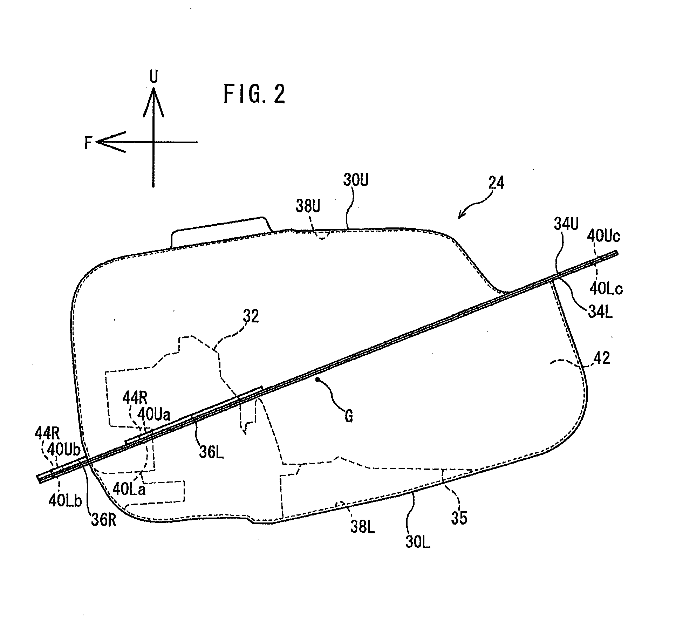

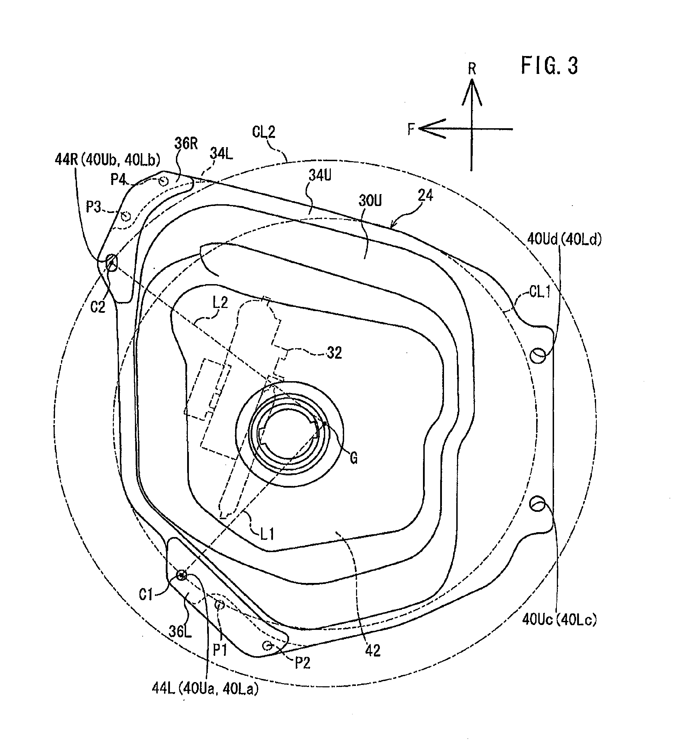

Referring to Figs. 2 and 3, the fuel tank 24 will be descried. Fig. 2 is a left side view of the fuel tank 24. Fig. 3 is a plan view of the fuel tank 24 when viewed in a direction perpendicular to a top surface of a flange 34U.

The fuel tank 24 includes a pair of tank sections 30U and 30L, flanges 34U and 34L, and reinforcing plates 36L and 36R. A fuel pump 32 is provided in the fuel tank 24.

The tank sections 30U and 30L are provided as they are placed on each other to form the fuel tank 24.

The tank section 30U is formed for example by processing a thin metal plate. The tank section 30U includes a hollow space 38U that is open to below.

The tank section 30U includes a flange 34U. The flange 34U is formed along the entire circumference of the tank section 30U at a lower end of the tank section 30U. The flange 34U has four fixing holes 40Ua to 40Ud.

The four fixing holes are a fixing 40Ua positioned more on the left and front side than the center of gravity G of the fuel tank 24, a fixing hole 40Ub positioned more on the right and front side than the center of gravity G, a fixing hole 40Uc positioned more on the left and back side than the center of gravity G, and a fixing hole 40Ud positioned more on the right and back side than the center of gravity G. Here, the center of gravity G refers to the center of gravity when the tank is filled with fuel.

The tank section 30L is formed for example by processing a thin metal plate. The tank section 30L includes a hollow space 38L that is open to above.

The tank section 30L includes a flange 34L. The flange 34L is formed along the entire circumference of the tank section 30L at a upper end of the tank section 30L. The flange 34L has four fixing holes 40La to 40Ld. The fixing holes 40La to 40Ld are formed in positions corresponding to the four fixing holes 40Ua to 40Ud, respectively.

The tank sections 30U and 30L are provided as they are placed on each other. As the flanges 34U and 34L are placed on each other, the fixing holes 40Ua to 40Ud overlap 40La to 40Ld, respectively.

In this state, the flanges 34U and 34L are seam-welded along the entire circumference. In this way, the fuel tank 24 is formed.

The flanges 34U and 34L may be provisionally fixed before they are seam-welded along the entire circumference. As a method of provisionally fixing the flanges 34U and 34L, for example, the flanges 34U and 34L may be spot welded in a plurality of locations.

The fuel tank 24 has a space 42 inside. The hollow space 38U of the tank section 30U and the hollow space 38L of the tank section 30L form the space 42.

The fuel pump 32 is provided in the space 42 formed by the pair of tank sections 30U and 30L. According to the embodiment, the fuel pump 32 is provided at a front portion of the fuel tank 24 or ahead of the center of gravity G. Particularly according to the embodiment, the suction opening of the fuel pump 32 is provided at the front portion of the fuel tank 24 or ahead of the center of gravity G. In the space 42, a high pressure fuel filter or the like may be provided in addition to the fuel pump 32.

The fuel pump 32 feeds fuel to the injector. More specifically, the motorcycle 10 includes a fuel injection system.

The reinforcing plate 36L is placed on an upper surface of the flange 34U. The reinforcing plate 36L is provided more on the front side than the center of gravity G and on the left side. More specifically, according to the embodiment, the reinforcing plate 36L corresponds to a first reinforcing plate.

The reinforcing plate 36L has a through hole 44L. The reinforcing plate 36L extends along an outer edge of the flange 34U from a position where the through hole 44L is formed.

According to the embodiment, the reinforcing plate 36L extends to the left in the backward direction from the forming position of the through hole 44L. Here, the reinforcing plate 36L extends away from a circle CL1 whose radius is a segment L1 that connects the center of gravity G and the center C1 of the through hole 44L. More specifically, the reinforcing plate 36L extends away from the center of gravity G from the forming position of the through hole 44L.

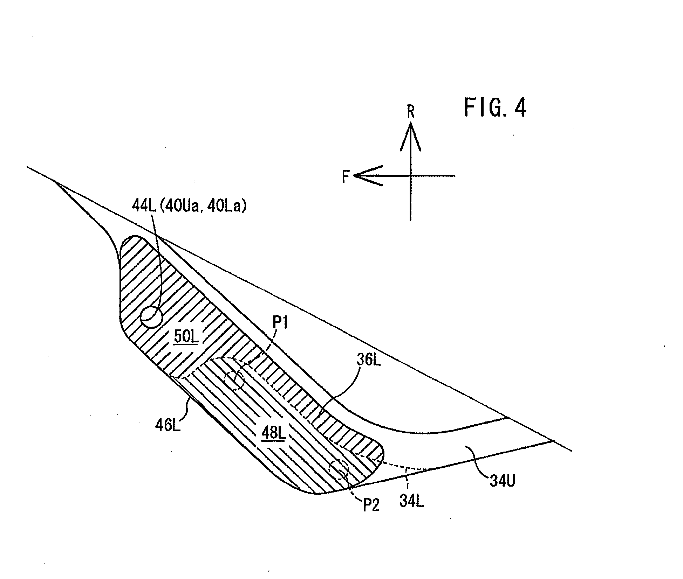

The reinforcing plate 36L is fixed to the flange 34U by spot-welding. Here, referring to Fig. 4, the position to spot-weld the reinforcing plate 36L to the flange 34U will be described. Fig. 4 is a plan view showing a position where the reinforcing plate 36L is spot-welded to the flange 34U.

The flanges 34U and 34L have different shapes at a position where the reinforcing plate 36L is attached and in the vicinity. In this way, the flange 34U has a region 48L that does not overlap the flange 34L in a region 46L which is overlapped by the reinforcing plate 36L.

The reinforcing plate 36L is spot-welded to the flange 34U in the region 48L. According to the embodiment, in two positions P1 and P2, the reinforcing plate 36L is spot-welded to the flange 34U.

As the reinforcing plate 36L is spot-welded to the flange 34U, the through hole 44L overlaps a region 50L defined by excluding the region 48L from the region 46L. The through hole 44L overlaps the fixing hole 40Ua and 40La.

Referring back to Figs. 2 and 3, the reinforcing plate 36R is provided as it is placed on an upper surface of the flange 34U. The reinforcing plate 36R is provided more on the front right side than the center of gravity G. More specifically, according to the embodiment, the reinforcing plate 36R corresponds to a second reinforcing plate.

The reinforcing plate 36R has a through hole 44R. The reinforcing plate 36R extends along an outer edge of the flange 34U from the forming position of the through hole 44R.

According to the embodiment, the reinforcing plate 36R extends to the right in the backward direction from the forming position of the through hole 44R. Here, the reinforcing plate 36R extends away from a circle CL2 whose radius is a segment L2 that connects the center of gravity G and the center C2 of the through hole 44R. More specifically, the reinforcing plate 36R extends away from the center of gravity G from the forming position of the through hole 44R.

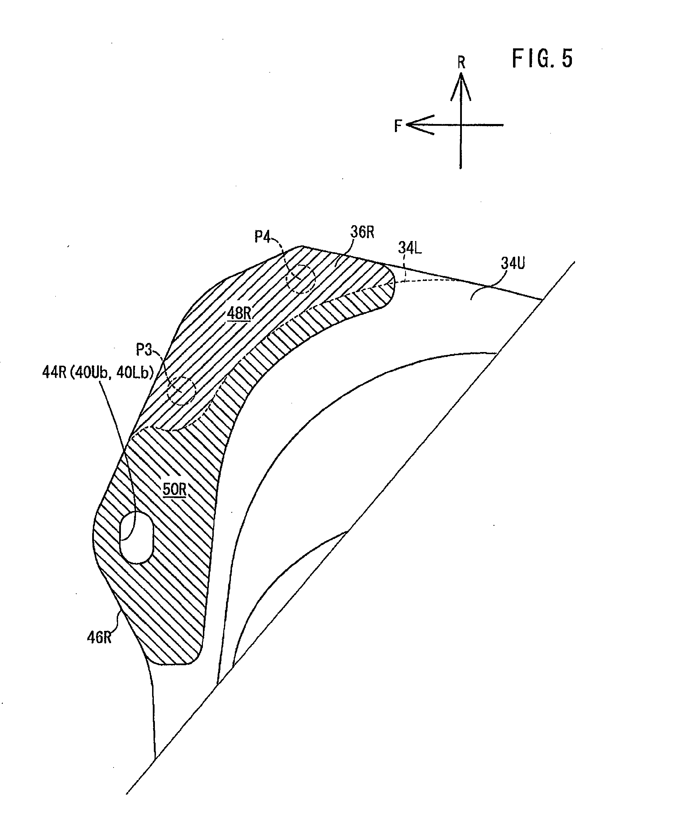

The reinforcing plate 36R is fixed to the flange 34U by spot welding. Now, referring to Fig. 5, the position to spot-weld the reinforcing plate 36R to the flange 34U will be described. Fig. 5 is a plan view showing the position to spot-weld the reinforcing plate 36R to the flange 34U.

The flanges 34U and 34L have different outer edge shapes at the position where the reinforcing plate 36R is attached and in its vicinity. Therefore, the flange 34U has a region 48R that does not overlap the flange 34L in a region 46R overlapped by the reinforcing plate 36R.

The reinforcing plate 36R is spot-welded to the flange 34U in the region 48R. According to the embodiment, the reinforcing plate 36R is spot-welded to the flange 34U in two positions P3 and P4.

As the reinforcing plate 36R is spot-welded to the flange 34U, the through hole 44R overlaps a region 50R defined by excluding the region 48R from the region 46R. The through hole 44R overlaps the fixing holes 40Ub and 40Lb.

### Support Structure for Fuel Tank

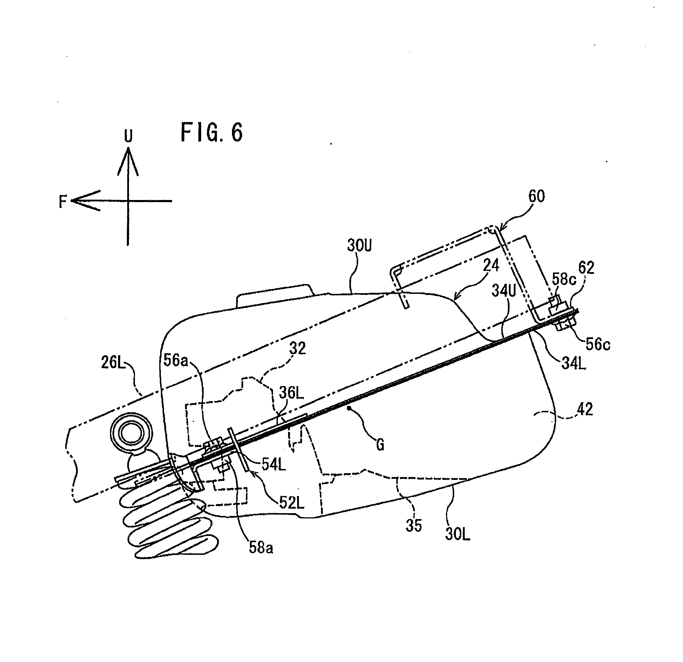

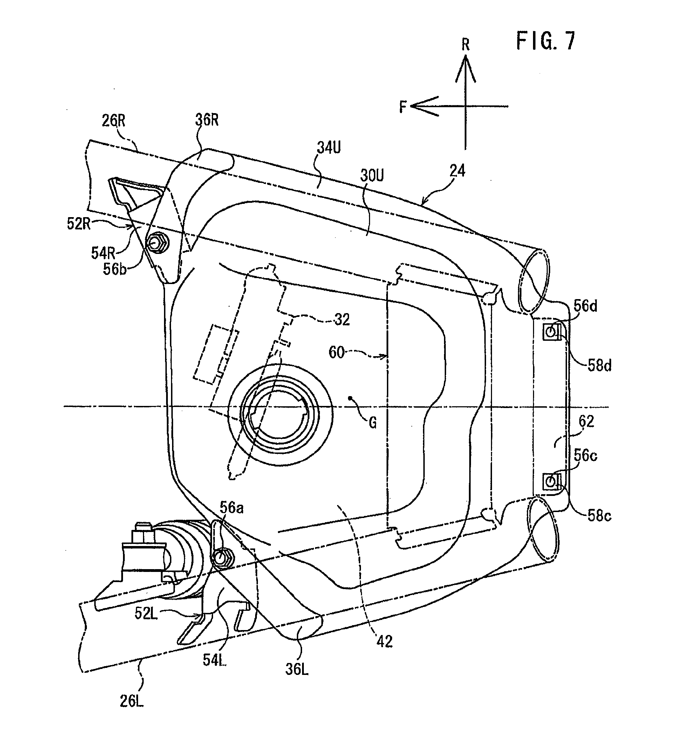

Referring to Figs. 6 and 7, a support structure for a fuel tank 24 will be described. Fig. 6 is a left side view of the support structure for the fuel tank 24. Fig. 7 is a plan view of the support structure for the fuel tank 24.

The fuel tank 24 is provided between the left and right frames 26L and 26R.

The left and right frames 26L and 26R form a vehicle body frame covered with a vehicle body cover 28 (see Fig. 1). The left and right frames 26L and 26R extend in the front-back direction of the motorcycle 10. According to the embodiment, the left and right frames 26L and 26R extend obliquely upward in the backward direction of the motorcycle 10.

The fuel tank 24 is fixed to the left and right frames 26L and 26R by a bolt.

More specifically, the frame 26L includes a bracket 52L provided at its lower part. The bracket 52L includes a support plate 54L. A lower surface of the flange 34L is placed on an upper surface of the support plate 54L. In this state, a bolt 56a is inserted through the through hole 44L, the fixing holes 40Ua and 40La, and the through hole of the support plate 54L. Then, as a nut 58a is attached to the bolt 56a, the fuel tank 24 is fixed to the bracket 52L.

The frame 26R includes a bracket 52R provided at its lower part. The bracket 52R includes a support plate 54R. A lower surface of the flange 34L is placed on an upper surface of the support plate 54R. In this state, a bolt 56b is inserted into the through hole 44R, the fixing holes 40Ub and 40Lb, and the through hole of the support plate 54R. Then, a nut is attached to the bolt 56b, so that the fuel tank 24 is fixed to the bracket 52R.

A bracket 60 that couples rear parts of the left and right frames 26L and 26R is provided between the left and right frames 26L and 26R. The bracket 60 includes a support plate 62. An upper surface of the flange 34U overlaps a lower surface of the support plate 62. In this state, a bolt 56c is inserted into the fixing holes 40Lc and 40Uc and the through hole of the support plate 62. A bolt 56d is inserted into the fixing holes 40Ld and 40Ud and the through hole of the support plate 62. Then, a nut 58c is attached to the bolt 56c and a nut 58d is attached to the bolt 56d, so that the fuel tank 24 is fixed to the bracket 60.

As described above, while the fuel tank 24 is fixed to the left and right frames 26L and 26R, parts of the flanges 34U and 34L are positioned below the frames 26L and 26R as shown in Figs. 6 and 7. At the time, the flanges 34U and 34L are approximately parallel to the frames 26L and 26R when they are viewed from a side of the vehicle.

In this way, as the fuel tank 24 is fixed to the left and right frames 26L and 26R, the lower surface of the front part of the fuel tank 24 is positioned below the lower surface of the rear part as shown in Fig. 6. In the motorcycle 10 that has the fuel tank 24 provided under the rear part of the seat 16 as shown in Fig. 1, the rear wheel 14 is provided under the fuel tank 24. The rear wheel 14 swings up and down. Therefore, the lower surface of the rear part of the fuel tank 24 is positioned above the lower surface of the front part so that the tank does not contact the rear wheel 14. In addition, according to the embodiment, a recess 35 is formed at the lower surface of the fuel tank 24. Therefore, the rear wheel 14 is more unlikely to contact the fuel tank 24.

According to the embodiment, the fuel pump 32 (particularly the suction opening of the fuel pump 32) is provided at the front part of the fuel tank 24. Therefore, when fuel is consumed, the center of gravity of the fuel tank 24 moves forward from the center of gravity G of the tank filled with fuel.

Note that Fig. 6 shows only the relation between the flanges 34U and 34L and the frame 26L but the same applies to the relation between the flanges 34U and 34L and the frame 26R.

As shown in Figs. 6 and 7, the reinforcing plate 36L is positioned below the frame 26L and the reinforcing plate 36R is positioned under the frame 26R.

As shown in Fig. 7, the reinforcing plate 36L has its one end positioned on the right side of the frame 26L and its other end positioned on the left side of the frame 26L. The reinforcing plate 36R has its one end positioned on the left side of the frame 26R and its other end positioned on the right side of the frame 26R.

The fuel tank 24 is positioned between and fixed to the left and right frames 26L and 26R that extend in the front-back direction of the motorcycle 10. The fuel tank 24 includes the pair of tank sections 30U and 30L, the flanges 34U and 34L, and the reinforcing plates 36L and 36R. The tank sections 30U and 30L are provided as they are placed on each other to form the fuel tank 24. A space 42 formed by the pair of tank sections 30U and 30L has the fuel pump 32 inside. The flange 34U is formed at the tank section 30U. The flange 34L is formed at the tank section 30L. The flanges 30U and 34L connect the pair of tank sections 30U and 30L. The flange 34U has the fixing holes 40Ua and 40Ub. The flange 34L has the fixing holes 40La and 40Lb. The bolt 56a used to fix the fuel tank 24 to the frame 26L is inserted in the fixing holes 40Ua and 40La. The bolt 56b used to fix the fuel tank 24 to the frame 26R is inserted in the fixing holes 40Ub and 40Lb. The reinforcing plates 36L and 36R are provided as they are placed on the flange 34U. The reinforcing plate 36L has the through hole 44L having the bolt 56a inserted therein. The reinforcing plate 36R has the through hole 44R having the bolt 56b inserted therein. The reinforcing plate 36L extends along the outer edge of the flange 34U from the forming position of the through hole 44L. The reinforcing plate 36R extends along the outer edge of the flange 34U from the forming position of the through hole 44R. In the first region 46L overlapped by the reinforcing plate 36L, the flange 34U has the second region 48L that does not overlap the other flange 34L. The flange 34U has the second region 48R that does not overlap the other flange 34L in the first region 46R overlapped by the reinforcing plate 36R. The fixing hole 40Ua of the flange 34U is positioned in the third region 50L defined by excluding the second region 48L from the first region 46L. The fixing hole 40Ub of the flange 34U is positioned in a third region 50R defined by excluding the second region 48R from the first region 46R. The reinforcing plate 36L is welded to the flange 34U in the second region 48L. The reinforcing plate 36R is welded to the flange 34U in the second region 48R.

The reinforcing plate 36L that extends along the outer edge of the flange 34U from the forming position of the through hole 44L is welded to the flange 34U. Therefore, the part of the fuel tank 24 fixed (by the bolt 56a) to the frame 26L have improved rigidity.

The reinforcing plate 36R that extends from the forming position of the through hole 44R along the outer edge of the flange 34U is welded to the flange 34U. Therefore, the part of the fuel tank 24 fixed (by the bolt 56b) to the frame 26R has improved rigidity.

The shape of the fuel tank 24 does not have to be changed in order to secure necessary rigidity for the parts of the fuel tank 24 fixed (by bolts 56a and 56b) to the frames 26L and 26R. Therefore, the fuel tank 24 can secure a necessary capacity.

In the fuel tank 24, when the fuel tank 24 is fixed to the left and right frames 26L and 26R, the reinforcing plate 36L extends from the forming position of the through hole 44L away from the center of gravity G of the tank 24 stored with a prescribed amount of fuel in the vehicle widthwise direction of the motorcycle 10 (see Fig. 7).

In this way, the part of the fuel tank 24 fixed (by the bolt 56a) to the frame 26L have even higher rigidity.

In the fuel tank 24, when the fuel tank 24 is fixed to the left and right frames 26L and 26R, the reinforcing plate 36R extends from the forming position of the through hole 44R away from the center of gravity G of the tank 24 stored with a prescribed amount of fuel in the vehicle widthwise direction of the motorcycle 10 (see Fig. 7).

In this way, the part of the fuel tank 24 fixed (by the bolt 56b) to the frame 26R have even higher rigidity.

In the fuel tank 24, the fuel pump 32 is ahead of the center of gravity G. The reinforcing plate 36L is positioned ahead of the center of gravity G. The reinforcing plate 36R is positioned ahead of the center of gravity G.

In this way, when fuel is consumed, the center of gravity of the fuel tank 24 moves forward from the center of gravity G. Therefore, force that acts on the fixing part (fixed by the bolts 56a and 56b) ahead of the center of gravity G is greater than that acting on the fixing part (fixed by the bolts 56c and 56d) behind the center of gravity G regardless of a remaining amount of fuel stored by the fuel tank 24. Therefore, when the reinforcing plates 36L and 36R are provided, the rigidity of the fixing part ahead of the center of gravity G among the fixing parts of the fuel tank 24 to the frames 26L and 26R improves. Therefore, the fuel tank 24 whose center of gravity moves forward as fuel is consumed can be employed. More specifically, in the fuel tank 24, when the center of gravity of the fuel tank 24 moves as fuel is consumed, it is not necessary to change the fixing positions for the fuel tank 24 to the frames 26L and 26R to ensure a certain rigidity of the corresponding parts.

In the fuel tank 24, the reinforcing plates 36L and 36R include a first reinforcing plate 36L provided on the left side of the center of gravity G and a second reinforcing plate 36R provided on the right side of the center of gravity G.

In this way, the rigidity can be increased in two fixing parts (fixed by bolts 56a and 56b).

The motorcycle 10 includes the left and right frames 26L and 26R and the fuel tank 24. The left and right frames 26L and 26R extend in the front-back direction of the vehicle. The fuel tank 24 is provided between and fixed to the left and right frames 26L and 26R. The fuel tank 24 includes the pair of tank sections 30U and 30L, the flanges 34U and 34L, and the reinforcing plates 36L and 36R. As the tank sections 30U and 30L are provided as they are placed on each other to form the fuel tank 24. The fuel pump 32 is provided in the space 42 formed by the pair of sections 30U and 30L. The flange 34U is formed at the tank section 30U. The flange 34L is formed at the tank section 30L. The flanges 34U and 34L connect the pair of tank sections 30U and 30L. The flange 34U has fixing holes 40Ua and 40Ub. The flange 34L has fixing holes 40La and 40Lb. The bolt 56a used to fix the fuel tank 24 to the frame 26L is inserted into the fixing holes 40Ua and 40La. The bolt 56b used to fix the fuel tank 24 to the frame 26R is inserted into the fixing holes 40Ub and 40Lb. The reinforcing plates 36L and 36R are provided as they are placed on the flange 34U. The reinforcing plate 36L has the through hole 44L into which the bolt 56a inserted. The reinforcing plate 36R has the through hole 44R into which the bolt 56b is inserted. The reinforcing plate 36L extends along the outer edge of the flange 34U from the forming position of the through hole 44L. The reinforcing plate 36R extends along the outer edge of the flange 34U from the forming position of the through hole 44R. In the first region 46L overlapped by the reinforcing plate 36L, the flange 34U has a second region 48L that does not overlap the other flange 34L. In the first region 46R overlapped by the reinforcing plate 36R, the flange 34U has a second region 48R that does not overlap the other flange 34L. The fixing hole 40Ua of the flange 34U is positioned in a third region 50L defined by excluding the second region 48L from the first region 46L. The fixing hole 40Ub of the flange 34U is positioned in the third region 50R defined by excluding the second region 48R from the first region 46R. The reinforcing plate 36L is welded to the flange 34U in the second region 48L. The reinforcing plate 36R is welded to the flange 34U in the second region 48R.

The reinforcing plate 36L that extends along the outer edge of the flange 34U from the forming position of the through hole 44L is welded to the flange 34U. Therefore, the part of the fuel tank 24 fixed to the frame 26L (fixed by the bolt 56a) have improved rigidity.

The reinforcing plate 36R that extends along the outer edge of the flange 34U from the forming position of the through hole 44R is welded to the flange 34U. Therefore, the part of the fuel tank 24 fixed to the frame 26R (fixed by the bolt 56b) have improved rigidity.

The shape of fuel tank 24 does not have to be changed in order to secure necessary rigidity for the parts of the fuel tank 24 fixed to the frames 26L and 26R (fixed by the bolts 56a and 56b). Therefore, the fuel tank 24 may have sufficient capacity.

In the motorcycle 10, the reinforcing plate 36L extends from the forming position of the through hole 44L away from the center of gravity G of the fuel tank when the tank stores a prescribed amount of fuel in the vehicle-widthwise direction of the motorcycle 10 (see Fig. 7).

In this way, the part of the fuel tank 24 fixed to the frame 26L (fixed by the bolt 56a) has even higher rigidity.

In the motorcycle 10, the reinforcing plate 36R extends from the forming position of the through hole 44R away from the center of gravity G of the fuel tank 24 when the tank stores a prescribed amount of fuel in the vehicle-widthwise direction of the motorcycle 10 (see Fig. 7).

In this case, the part of the fuel tank 24 fixed to the frame 26R (fixed by the bolt 56b) has even higher rigidity.

In the motorcycle 10, the fuel pump 32 is provided ahead of the center of gravity G. The reinforcing plate 36L is positioned ahead of the center of gravity G. The reinforcing plate 36R is positioned ahead of the center of gravity G.

In this case, when fuel is consumed, the center of gravity of the fuel tank 24 moves ahead of the center of gravity G. Therefore, force that acts on the fixing part (fixed by the bolts 56a and 56b) ahead of the center of gravity G is greater than force that acts on the fixing parts (fixed by the bolts 56c and 56d) behind the center of gravity G regardless of a remaining amount of fuel stored by the fuel tank 24. Here, providing the reinforcing plates 36L and 36R as described above improves the rigidity of the parts of the fuel 24 fixed to the frames 26L and 26R ahead of the center of gravity G. Therefore, the fuel tank 24 whose center of gravity moves forward as fuel is consumed can be employed. More specifically, in the motorcycle 10, when the center of gravity of the fuel tank 24 moves as fuel is consumed, it is not necessary to change the fixing positions for the fuel tank 24 to the frames 26L and 26R to ensure a certain rigidity of the corresponding parts.

In the motorcycle 10, the reinforcing plate 36L is positioned under the frame 26L (among the left and right frames 26L and 26R) to which the flanges 34U and 34L are fixed by the bolt 56a that is inserted into the through hole 40L when viewed from a side of the vehicle (see Fig. 6). The reinforcing plate 36R is positioned under the frame 26R (among the left and right frames 261 and 26R) to which the flanges 34U and 34L are fixed by the bolt 56b that is inserted through the through hole 40R when viewed from a side of the vehicle.

In this way, the fuel tank 24 hardly projects above the left and right frames 26L and 26R. As a result, the height of the seat 16 from the ground can be lowered.

In the motorcycle 10, the frame 26L and the flanges 34U and 34L extend obliquely upward in the backward direction of the vehicle when viewed from a side of the vehicle (see Fig. 6). The frame 26R and the flanges 34U and 34L extend obliquely upward in the backward direction of the vehicle.

This makes it easier to secure a height for the front part of the fuel tank 24.

In the motorcycle 10, a part of the reinforcing plate 36L is positioned under the frame 26L in a plan view of the vehicle (see Fig. 7).

In this way, the two-dimensional shape of the reinforcing plate 36L increases in size. Therefore, the part of the fuel tank 24 fixed to the frame 26L (fixed by the bolt 56a) has even higher rigidity.

In the motorcycle 10, a part of the reinforcing plate 36R is positioned under the frame 26R in a plan view of the vehicle (see Fig. 7).

In this way, the two-dimensional shape of the reinforcing plate 36R increases in size. Therefore, the part of the fuel tank 24 fixed to the frame 26R (fixed by the bolt 56b) has even higher rigidity.

In the fuel tank 24, the reinforcing plates 36L and 36R include a first reinforcing plate 36L provided on the left side of the center of gravity G and a second reinforcing plate 36R provided on the right side of the center of gravity G.

In this way, the rigidity can be improved in a plurality of fixing parts.

In the above-described embodiment, a reinforcing plate may be provided at rear fixing parts of the fuel tank 24 (fixed by the bolts 56c and 56d).

In the foregoing, a scooter type motorcycle according to the embodiment has been described but the invention is not limited to this example. The motorcycle may be for example a motorcycle other than the scooter type vehicle or may be a three-wheel or a four-wheel leaning vehicle.

Although the present invention has been described and illustrated in detail, it is clearly understood that the same is by way of illustration and example only and is not to be taken by way of limitation. The present invention may be carried out in various modified forms without departing from the scope of the present invention.

## Claims

1. A fuel tank for mounting to left and right frames (26L, 26R) that extend in a front-back direction of a saddle riding type vehicle, the fuel tank comprising:
a pair of tank sections (30U, 30L) placed on each other to form the fuel tank (24), the pair of tank sections (30U, 30L) forming a space adapted to receive a fuel pump (32); and
a flange (34U, 34L) formed at each of the pair of tank sections (30U, 30L) for connecting the pair of tank sections (30U, 30L), each flange (34U, 34L) having a fixing hole (40Ua, 40Ub, 40La, 40Lb) for inserting a bolt (56a, 56b) for fixing the fuel tank (24) to the left and right frames(26L, 26R), the fixing hole (40Ua, 40Ub) of one flange (34U) overlapping the fixing hole (40La, 40Lb) of the other flange (34L);
**characterized by**
a reinforcing plate (36L, 36R) provided on said one flange (34U), having a through hole (44L, 44R) for inserting the bolt, and extending along an outer edge of said one flange (34U) from a position where the through hole (44L, 44R) is formed; wherein
in a first region (46L, 46R) overlapped by the reinforcing plate (36L, 36R), said one flange (34U) has a second region (48L, 48R) that does not overlap the other flange (34L),
the fixing hole of said one flange (34U) is positioned in a third region (50L. 50R) defined by excluding the second region (48L, 48R) from the first region (46L, 46R),
the through hole (44L, 44R) of the reinforcing plate (36L, 36R) overlapping the fixing hole (40La, 40Lb) of the other flange (34L) and the fixing hole (40Ua, 40Ub) of said one flange (34U), and
the reinforcing plate (36L, 36R) is welded to said one flange (34U) in the second region (48L, 48R).

2. The fuel tank according to claim 1, wherein, when the fuel tank (24) is fixed to the left and right frames (26L, 26R), the reinforcing plate (36L, 36R) extends from the position of the through hole (44L, 44R) away from a center of gravity (G) of the fuel tank (24) in a vehicle widthwise direction.

3. The fuel tank according to claim 2, wherein the fuel tank is adapted to receive the fuel pump (32) ahead of the center of gravity (G), and
the reinforcing plate (36L, 36R) is positioned ahead of the center of gravity (G).

4. The fuel tank according to claim 3, comprising two reinforcing plates, wherein:
a first reinforcing plate (36L) is provided on the left side of the center of gravity (G), and
a second reinforcing plate (36R) is provided on the right side of the center of gravity (G).

5. A saddle riding type vehicle, comprising:
left and right frames (26L, 26R) that extend in a vehicle front-back direction; and
a fuel tank (24) according to one of claims 1 to 4 provided between and fixed to the left and right frames (26L, 26R).

6. The saddle riding type vehicle according to claim 5, wherein when viewed from a side of the vehicle, the reinforcing plate (36L, 36R) is positioned under one frame among the left and right frames (26L, 26R) to which the flange (34U, 34L) is fixed by the bolt inserted in the through hole (44L, 44R).

7. The saddle riding type vehicle according to claim 6, wherein when viewed from a side of the vehicle, said one frame and the flange (34U, 34L) extend obliquely upward in a vehicle backward direction.

8. The saddle riding type vehicle according to claim 6 or 7, wherein in a plan view of the vehicle, a part of the reinforcing plate (36L, 36R) is positioned under said one frame.

## Patentansprüche

1. Ein Kraftstofftank zum Befestigen an einem linken und rechten Rahmen (26L, 26R), die sich bei einem Fahrzeug vom Sattelreittyp von vorne nach hinten erstrecken, wobei der Kraftstofftank folgende Merkmale aufweist:
ein Paar von Tankabschnitten (30U, 30L), die aufeinander platziert sind, um den Kraftstofftank (24) zu bilden, wobei das Paar von Tankabschnitten (30U, 30L) einen Raum bildet, der angepasst ist, um eine Kraftstoffpumpe (32) aufzunehmen; und
einen Flansch (34U, 34L), der an jedem des Paars von Tankabschnitten (30U, 30L) zum Verbinden des Paars von Tankabschnitten (30U, 30L) gebildet ist, wobei jeder Flansch (34U, 34L) ein Befestigungsloch (40Ua, 40Ub, 40La, 40Lb) zum Einfügen eines Bolzens (56a, 56b) zum Befestigen des Kraftstofftanks (24) an dem linken und rechten Rahmen (26L, 26R) aufweist, wobei das Befestigungsloch (40Ua, 40Ub) eines Flanschs (34U) das Befestigungsloch (40La, 40Lb) des anderen Flanschs (34L) überlappt;
**gekennzeichnet durch**:
eine Verstärkungsplatte (36L, 36R), die auf dem einen Flansch (34U) vorgesehen ist, die ein Durchgangsloch (44L, 44R) zum Einfügen des Bolzens aufweist, und sich entlang einem äußeren Rand des einen Flanschs (34U) von einer Position erstreckt, wo das Durchgangsloch (44L, 44R) gebildet ist, wobei
in einer ersten Region (46L, 46R), die **durch** die Verstärkungsplatte (36L, 36R) überlappt wird, der eine Flansch (34U) eine zweite Region (48L, 48R) aufweist, die den anderen Flansch (34L) nicht überlappt,
das Befestigungsloch des einen Flanschs (34U) in einer dritten Region (50L, 50R) positioniert ist, die **durch** Ausnehmen der zweiten Region (48L, 48R) von der ersten Region (46L, 46R) definiert ist,
das Durchgangsloch (44L, 44R) der Verstärkungsplatte (36L, 36R) das Befestigungsloch (40La, 40Lb) des anderen Flanschs (34L) und das Befestigungsloch (40Ua, 40Ub) des einen Flanschs (34U) überlappt, und
die Verstärkungsplatte (36L, 36R) in der zweiten Region (48L, 48R) an den einen Flansch (34U) geschweißt ist.

2. Der Kraftstofftank gemäß Anspruch 1, wobei, wenn der Kraftstofftank (24) an dem linken und rechten Rahmen (26L, 26R) befestigt ist, die Verstärkungsplatte (36L, 36R) sich von der Position des Durchgangslochs (44L, 44R) in einer Fahrzeugbreiterichtung weg von dem Schwerpunkt (G) des Kraftstofftanks (24) erstreckt.

3. Der Kraftstofftank gemäß Anspruch 2, wobei der Kraftstofftank angepasst ist, um die Kraftstoffpumpe (32) vor dem Schwerpunkt (G) aufzunehmen, und
die Verstärkungsplatte (36L, 36R) vor dem Schwerpunkt (G) positioniert ist.

4. Der Kraftstofftank gemäß Anspruch 3, der zwei Verstärkungsplatten aufweist, wobei:
eine erste Verstärkungsplatte (36L) auf der linken Seite des Schwerpunkts (G) vorgesehen ist, und
eine zweite Verstärkungsplatte (36R) auf der rechten Seite des Schwerpunkts (G) vorgesehen ist.

5. Ein Fahrzeug vom Sattelreittyp, das folgende Merkmale aufweist:
einen linken und rechten Rahmen (26L, 26R), die sich bei dem Fahrzeug von vorne nach hinten erstrecken; und
einen Kraftstofftank (24) gemäß einem der Ansprüche 1 bis 4, der zwischen dem linken und rechten Rahmen (26L, 26R) vorgesehen ist und an denselben befestigt ist.

6. Das Fahrzeug vom Sattelreittyp gemäß Anspruch 5, bei dem von einer Seite des Fahrzeugs aus gesehen die Verstärkungsplatte (36L, 36R) unter einem Rahmen des linken und rechten Rahmens (26L, 26R) positioniert ist, an dem der Flansch (34U, 34L) durch den Bolzen befestigt ist, der in das Durchgangsloch (44L, 44R) eingefügt ist.

7. Das Fahrzeug vom Sattelreittyp gemäß Anspruch 6, bei dem von einer Seite des Fahrzeugs aus gesehen der eine Rahmen und der Flansch (34U, 34L) sich in einer Fahrzeugrückwärtsrichtung schräg nach oben erstrecken.

8. Das Fahrzeug vom Sattelreittyp gemäß Anspruch 6 oder 7, bei dem in einer Draufsicht des Fahrzeugs ein Teil der Verstärkungsplatte (36L, 36R) unter dem einen Rahmen positioniert ist.

## Revendications

1. Réservoir de carburant destiné à être monté sur les châssis gauche et droit (26L, 26R) qui s'étendent dans une direction de l'avant vers l'arrière d'un véhicule de type à selle, le réservoir de carburant comprenant:
une paire de segments de réservoir (30U, 30L) placés l'un sur l'autre, pour former le réservoir de carburant (24), la paire de segments de réservoir (30U, 30L) formant un espace adapté pour recevoir une pompe à carburant (32); et
une bride (34U, 34L) formée sur chacun de la paire de segments de réservoir (30U, 30L) pour connecter la paire de segments de réservoir (30U, 30L), chaque bride (34U, 34L) présentant un trou de fixation (40Ua, 40Ub , 40La, 40 Lb) destiné à l'insertion d'un boulon (56a, 56b) pour la fixation du réservoir de carburant (24) aux carrosseries gauche et droite (26L, 26R), le trou de fixation (40Ua, 40Ub) d'une bride (34U) venant en recouvrement avec le trou de fixation (40La, 40Lb) de l'autre bride (34L);
**caractérisé par**
une plaque de renforcement (36L, 36R) prévue sur ladite première bride (34U), présentant un trou traversant (44L, 44R) pour l'insertion du boulon, et s'étendant le long d'un bord extérieur de ladite une bride (34U) à partir d'une position dans laquelle est formé le trou (44L, 44R); où
dans une première zone (46L, 46R) en recouvrement par la plaque de renforcement (36L, 36R), ladite une bride (34U) présente une deuxième région (48L, 48R) qui ne vient pas en recouvrement avec l'autre bride (34L),
le trou de fixation de ladite une bride (34U) est disposé dans une troisième région (50L, 50R) définie par l'exclusion de la deuxième région (48L, 48R) de la première région (46L, 46R),
le trou traversant (44L, 44R) de la plaque de renforcement (36L, 36R) venant en recouvrement avec le trou de fixation (40La, 40Lb) de l'autre bride (34L) et le trou de fixation (40Ua, 40Ub) de ladite une bride (34U), et
la plaque de renforcement (36L, 36R) est soudée à ladite une bride (34U) dans la deuxième région (48L, 48R).

2. Réservoir de carburant selon la revendication 1, dans lequel, lorsque le réservoir de carburant (24) est fixé aux carrosseries gauche et droite (26L, 26R), la plaque de renforcement (36L, 36R) s'étend à partir de la position du trou traversant (44L, 44R) en s'éloignant d'un centre de gravité (G) du réservoir de carburant (24) dans une direction de la largeur du véhicule.

3. Réservoir de carburant selon la revendication 2, dans lequel le réservoir de carburant est adapté pour recevoir la pompe à carburant (32) en avant du centre de gravité (G), et
la plaque de renforcement (36L, 36R) est positionnée en avant du centre de gravité (G).

4. Réservoir de carburant selon la revendication 3, comprenant deux plaques de renforcement, dans lequel:
une première plaque de renforcement (36L) est prévue à gauche du centre de gravité (G), et
une deuxième plaque de renforcement (36R) est disposée à droite du centre de gravité (G).

5. Véhicule de type à selle, comprenant:
les châssis gauche et droit (26L, 26R) qui s'étendent dans une direction de l'avant à l'arrière du véhicule; et
un réservoir de carburant (24) selon l'une des revendications 1 à 4 prévu entre les et fixés aux carrosseries gauche et droit (26L, 26R).

6. Véhicule de type à selle selon la revendication 5, dans lequel, lorsque vue d'un côté du véhicule, la plaque de renforcement (36L, 36R) est positionnée sous une carrosserie parmi les carrosseries gauche et droite (26L, 26R) à laquelle la bride (34U, 34L) est fixée par le boulon inséré dans le trou traversant (44L, 44R).

7. Véhicule de type à selle selon la revendication 6, dans lequel, lorsque vues d'un côté du véhicule, ladite une carrosserie et la bride (34U, 34L) s'étendent obliquement vers le haut dans une direction vers l'arrière du véhicule.

8. Véhicule de type à selle selon la revendication 6 ou 7, dans lequel, en vue en plan du véhicule, une partie de la plaque de renforcement (36L, 36R) est positionnée sous ladite une carrosserie.
